# EUROPÄISCHE PATENTSCHRIFT

(11) **EP 2 954 255 B1**
(45) Veröffentlichungstag und Bekanntmachung des Hinweises auf die Patenterteilung: **22.02.2017**
(21) Anmeldenummer: 13820720.4
(22) Anmeldetag: 10.12.2013
(51) Int. Cl.: F21S 8/10, F21V 8/00

(54) **LEUCHTEINHEIT MIT LICHTLEITSTÄBEN FÜR EINEN SCHEINWERFER**
HEADLIGHT ASSEMBLY COMPRISING LIGHT-CONDUCTING RODS FOR A HEADLIGHT
UNITÉ LUMINESCENTE COMPORTANT DES BARRES PHOTOCONDUCTRICES POUR UN PHARE

(30) Priorität: 05.02.2013 AT 500882013
(43) Veröffentlichungstag der Anmeldung: 16.12.2015
(73) Patentinhaber: ZKW Group GmbH, 3250 Wieselburg (AT)
(72) Erfinder: BAUER, Friedrich, 3252 Bergland (AT); PIRRINGER, Erik, 3250 Wieselburg (AT); MAIER, Udo, 3130 Herzogenburg (AT)
(74) Vertreter: Patentanwaltskanzlei Matschnig & Forsthuber OG
(86) Internationale Anmeldenummer: PCT/AT2013/050242
(87) Internationale Veröffentlichungsnummer: WO 2014/121310

(56) Entgegenhaltungen:
- EP-A1- 1 085 256
- EP-A2- 2 280 215
- WO-A1-2011/121488
- DE-A1-102010 052 479
- DE-U1- 29 721 948
- US-A1- 2005 140 270
- US-A1- 2008 247 188
- US-A1- 2008 253 144

## Beschreibung

Die Erfindung betrifft eine Leuchteinheit für einen Scheinwerfer, insbesondere einen Kraftfahrzeugscheinwerfer, wobei die Leuchteinheit eine Mehrzahl von Lichtquellen, eine Lichtführungseinheit und eine nachgeschaltete Projektionslinse umfasst, wobei die Lichtführungseinheit eine Mehrzahl von Lichtführungen aufweist, wobei jede Lichtführung je eine Lichtauskoppelfläche und je eine Lichteinkoppelfläche aufweist, und wobei jede Lichtquelle Licht genau in eine ihr zugeordnete Lichtführung über jeweils eine Lichteinkoppelfläche einkoppelt. Das gattungsgemäße Dokument WO 2011/121488 offenbart eine derartige Leuchteinheit.

Weiters betrifft die Erfindung einen Fahrzeugscheinwerfer für ein Kraftfahrzeug mit zumindest einer solchen Leuchteinheit.

Mit einer oben erwähnten Leuchteinheit ist es möglich, eine Lichtfunktion wie z.B. eine Abblendlichtverteilung oder eine Fernlichtverteilung aus einer Vielzahl von Teillichtverteilungen aufzubauen. Diese Teillichtverteilungen können durch individuelle Ansteuerung der Lichtquellen individuell angesteuert werden, sodass beispielsweise Teile der Lichtverteilung gezielt ausgeblendet oder gedimmt oder nur bestimmte Teile der Lichtverteilung eingeschaltet oder gedimmt betrieben werden können. Damit wird es somit möglich, die Lichtverteilung in Abhängigkeit der Fahrsituation nahezu beliebig zu steuern.

Funktionen, die mit dieser Technik realisiert werden können sind z.B. Teilfernlicht, bei welchem zur Entblendung des Gegenverkehrs Segmente im Lichtbild der Fernlichtverteilung abgeschaltet werden, Verlagerung des Lichtschwerpunktes im Abblendlicht (vergleiche Kurvenlicht), Reduktion der Vorfeldlichtverteilung zum Zwecke der Entblendung des Gegenverkehrs bei nasser Straße (Schlechtwetterlicht), usw.

Die einzelnen Lichtsegmente in der Lichtverteilung werden mittels Lichtführungen erzeugt, welche zu einer Lichtführungseinheit zusammengefügt sind, und durch welche Lichtführungen das von den künstlichen Lichtquellen ausgestrahlt in Abstrahlrichtung gebündelt wird. Die Lichtführungen weisen einen relativ geringen Querschnitt auf und senden das Licht der ihnen je zugeordneten einzelnen Lichtquellen daher sehr konzentriert in die Abstrahlrichtung aus. In der AT 510 437 A4 ist in diesem Zusammenhang ein Lichtmodul offenbart, welches eine Lichtführung in Form eines Lichtleiters, dort als Lichttunnel bezeichnet, sowie eine Mehrzahl von Lichtquellen aufweist.

Grundsätzlich kann es sich bei den Lichtführungen um Lichtleitkörper, in welchen das über die Lichteinkoppelfläche eingekoppelte Licht total reflektiert wird und anschließend über die Lichtaustrittsfläche wieder austritt, handeln. Eine Lichtführungseinheit besteht in diesem Fall aus einer Anzahl nebeneinander angeordneter, miteinander verbundener oder vorzugsweise aus einem Stück gefertigter solcher Lichtleitkörper.

Die Lichtführungen können auch als Reflektoren ausgeführt sein, bilden also quasi ein hohles Rohr, an dessen einer offenen Seite Licht eingekoppelt, in dem Rohr reflektiert und an der anderen offenen Seite wieder abgestrahlt wird. Die Lichtführungseinheit besteht somit aus einer Anzahl von nebeneinander angeordneten, vorstehend beschriebenen Lichtführungen, welche durch - vorzugsweise möglichst dünne - Trennwände voneinander getrennt sind.

Eine solche Lichtführungseinheit ist in der Regel aus Kunststoff ausgeführt, außerdem ist vorgesehen, dass die Lichtführungseinheit zumindest im Bereich zwischen benachbarten Lichtführungen möglichst dünnwandig ausgeführt ist, um unerwünschte optische Nebeneffekte minimieren zu können.

Allerdings kommt es bei solchen Lichtführungseinheiten auf Grund der thermischen und optischen Belastungen insbesondere im Bereich der Lichteinkoppelstellen der Lichtführungen leicht zu Beschädigungen oder Zerstörungen der Lichtführungseinheit.

Um dieses Problem zu beseitigen, kann überlegt werden, einen thermisch beständigen, insbesondere einen hochtemperaturtauglichen Kunststoff zu verwenden. Allerdings ist es notwendig, die Lichtführungseinheit, in deren Lichtführungen sich ja das eingekoppelte Licht fortpflanzen soll, mit einer Licht reflektierenden, insbesondere hoch-reflektierenden Schicht zu versehen, vorzugsweise zu bedampfen, damit sich das Licht in den Lichtführungen fortpflanzen kann und nicht absorbiert wird.

Allerdings ergibt sich dadurch eine stark eingeschränkte Auswahlmöglichkeit unter den verwendbaren Kunststoffen, da viele hochtemperaturtaugliche Kunststoffe nicht oder nicht besonders gut mit einer reflektierenden Schicht bedampft werden können.

Auch die Verwendung von durchsichtigen Kunststoffen hat sich als nicht geeignet erwiesen, da hier neben der thermischen Schädigung des Materials noch ein Vergilbungseffekt auftreten kann.

Positioniert man die Lichtquellen, d.h. die LED-Lichtquellen in einem ausreichend großen Abstand zu den Lichteinkoppelstellen der Lichtführungen, so kommt es zu einem starken, unerwünschten Wirkungsgradverlust der Lichtquellen.

Die Verwendung von Silikonmaterial für die Lichtführungseinheit führt zu thermisch wesentlich stabileren Lichtführungseinheiten, allerdings müssen auch diese mit einem in der Regel aus Kunststoff gefertigten Halter gefertigt werden, sodass sich das oben geschilderte Problem wiederum ergibt und zu einer Beschädigung bzw. Zerstörung des Halters führen kann.

Die Positionierung einer einfachen, optisch transparenten Glasplatte zwischen den Lichtquellen und der Lichtführungseinheit führt zwar zu einer thermischen Entkoppelung, allerdings kommt es dann zu einem Übersprechen zwischen den einzelnen Lichtführungen, d.h. Lichtquellen koppeln das von ihnen emittierte Licht nicht nur in die genau eine zugeordnete Lichtführung, sondern auch in andere Lichtführungen ein, sodass bei Aktivieren einer bestimmten Lichtquelle nicht nur ein Lichtsegment wie gewünscht den Bereich vor dem Fahrzeug beleuchtet, sondern mehrere Lichtsegmente im Lichtbild abgebildet werden, was unerwünscht ist.

Es ist eine Aufgabe der Erfindung, eine Lösung für das oben beschriebene Problem anzugeben.

Diese Aufgabe wird mit einer eingangs erwähnten Leuchteinheit dadurch gelöst, dass erfindungsgemäß zwischen den Lichtquellen und den Lichteinkoppelflächen der Lichtführungen Lichtleitstäbe angeordnet sind, welche Lichtleitstäbe zu zumindest einem Lichtleitstab-Paket zusammengefasst sind, und wobei jede Lichtquelle Licht im Wesentlichen ausschließlich in die Lichtleitstab-Einkoppelstellen von der jeweiligen Lichtquelle zugeordneten Lichtleitstäben einkoppelt, und wobei das aus den Lichtleitstab-Auskoppelstellen austretende Licht einer zugeordneten Lichtquelle im Wesentlichen ausschließlich in die Lichteinkoppelfläche der der jeweiligen Lichtquelle zugeordneten Lichtführung einkoppelt.

Durch die Zwischenschaltung zumindest eines optischen Elementes in Form eines Lichtleitstab-Paketes zwischen die Lichtquellen und die Lichtführungseinheit kann die Lichtführungseinheit thermisch von den Lichtquellen entkoppelt werden, sodass es zu keinen thermischen Beeinträchtigungen der Lichtführungseinheit durch die Lichtquellen kommt.

Durch den erfindungsgemäßen Aufbau des zwischengeschalteten (zumindest einen) Elementes in Form eines Lichtleitstab-Paketes, welches aus einer Vielzahl an Lichtleitstäben besteht, in welchen sich das eingespeiste Licht mittels Totalreflexion fortpflanzt, kann eine Lichtquelle genau auf die Lichteinkoppelstelle der ihr zugeordneten Lichtführung abgebildet werden, sodass vermieden wird, dass eine Lichtquelle Licht in eine andere als die ihr zugeordnete Lichtführung einkoppelt. Je geringer dabei der Querschnitt der einzelnen Lichtleitstäbe ist, d.h. umso mehr Lichtleitstäbe für die Abbildung einer Lichtquelle auf die zugeordnete Lichteinkoppelstelle der Lichtführung sorgen, umso exakter wird dabei die Lichtquelle auf die Lichteinkoppelstelle abgebildet.

Dadurch, dass die Lichtquellen bzw. deren Lichtaustrittsflächen in der Regel nicht unmittelbar aneinander anliegen sondern einen gewissen Abstand zueinander aufweisen, ist bei entsprechend geringem Durchmesser der Lichtleitstäbe auch zuverlässig dafür gesorgt, dass eine Lichtquelle nicht, auch nicht in geringem Ausmaß (bzw. nur in einem nicht relevanten Ausmaß), Licht in eine nicht zugeordnete Lichtführung einkoppelt.

Bei einer konkreten Ausführungsform der Erfindung ist vorgesehen, dass eine Anzahl von Lichtleitstäben zu einem Faserstab zusammengefasst ist, und dass das zumindest eine Lichtleitstab-Paket aus einer Anzahl solcher Faserstäbe besteht, sodass jede Lichtquelle Licht in eine Anzahl solcher Faserstäbe einkoppelt.

Eine Anzahl von Faserstäben bildet somit ein sogenanntes Faserstab-Paket, d.h. die Faserstäbe, welche jeweils wiederum aus einer Anzahl von Lichtleitstäben bestehen, sind zu einem Faserstab-Paket zusammengefasst. Die Begriffe "Faserstab-Paket" und "Lichtleitstab-Paket" bezeichnen somit dasselbe optische Element.

Wie der DE 10 2010 052 479 A1 zu entnehmen, sind vorzugsweise 7, 19, 37, 61, 91 usw. Lichtleitstäbe in einem Faserstab angeordnet.

Die Zusammenfassung der Lichtleitstäbe in einem Lichtleitstab-Paket bzw. der Faserstäbe in einem Faserstab-Paket hat den Vorteil, dass beim Zusammenbau der erfindungsgemäßen Leuchteinheit Toleranzen nicht oder nur in geringem Ausmaß berücksichtigt werden, anders, als dies der Fall wäre, wenn beispielsweise zwischen jeder Lichtquelle und jeder Lichteinkoppelstelle einer Lichtführung nur ein einziger total reflektierender Lichtleitkörper angeordnet wäre.

Von besonderem Vorteil ist es dabei, wenn Lichtleitstäbe zu genau einem Lichtleitstab-Paket zusammengefasst sind, was gleichbedeutend damit ist, dass auch die Faserstäbe zu genau einem Faserstab-Paket zusammengefasst sind (für den Fall, dass Lichtleitstäbe zu Faserstäben zusammengefasst sind).

Dies hat den Vorteil, dass lediglich ein einziges zusätzliches optisches Element zwischen die Lichtquellen und die Lichtführungseinheit eingebaut werden muss, bei welchem - bei ausreichend hoher Anzahl an Lichtleitstäben - ein seitliches Verrutschen des optischen Elementes in Richtungen normal auf eine Normale auf die Lichtaustrittsflächen der Lichtquellen völlig unerheblich ist, da bei ausreichend hoher Auflösung (d.h. ausreichend hoher Anzahl an Lichtleitstäben) die Lichtaustrittsfläche nahezu 1:1 auf die Lichteinkoppelstelle der zugeordneten Lichtführung abgebildet wird und nur geringe Mengen an Licht in benachbarte Lichtleitstäbe gelangt, welche Licht nicht in die zugeordnete Lichteinkoppelstelle einkoppeln. Dieses Licht gelangt außerdem zu einem Großteil bzw. gar nicht in nicht zugeordnete Lichtführungen, sodass sich auch keine nachteiligen optischen Effekte ergeben können.

Um eine möglichst dichte Packung der Lichtleitstäbe zu erreichen, ist vorgesehen, dass die Lichtleitstäbe einen quadratischen oder vorzugsweise hexagonalen Querschnitt aufweisen.

Aus diesem Grund ist auch vorgesehen, dass die Faserstäbe einen quadratischen oder vorzugsweise hexagonalen Querschnitt aufweisen.

Die Herstellung von erfindungsgemäß verwendeten Lichtleitstäben und gegebenenfalls darauf gebildeten Faserstäben ist beispielsweise in der DE 10 2010 052 479 A1 im Detail beschrieben.

Die Außenkontur der Lichtleitstäbe bzw. der Faserstäbe ist somit quadratisch oder vorzugsweise hexagonal ausgebildet. Damit ergibt sich, wie dies in der DE 10 2010 052 479 A1 beschrieben ist eine hohe Packungsdichte der Lichtleitstäbe bzw. der Faserstäbe.

Aus fertigungstechnischen Gründen kann es von Vorteil sein, wenn die Lichtleitstäbe eines Faserstabes von einer Hülle, vorzugsweise einer Glashülle umgeben sind.

Eine solche Glashülle kann wie in der DE 10 2010 052 479 A1 beschrieben zum Zusammenhalten der Lichtleitstäbe beim Fertigungsprozess der Faserstäbe vorgesehen sein und wird dann Bestandteil des Faserbündels.

Um optimale total reflektierende Eigenschaften der Lichtleitstäbe zu erreichen, kann vorgesehen sein, dass die Lichtleitstäbe in Form von Stab-Rohr-Systemen aus Glas ausgebildet sind, mit einem Mantelglas als Rohr und einem Kernglas als Stab, wobei das Kernglas von dem Mantelglas ummantelt ist.

Dabei ist dann vorzugsweise vorgesehen, dass das Kernglas einen Brechungsindex aufweist, der größer ist als der Brechungsindex des Mantelglases.

Auf diese Weise wird eine Übertragung von Licht in Folge von Reflexion an den Grenzflächen des inneren und des äußeren Glases in einem Lichtleitstab möglich.

Um ein mechanisch stabiles Paket zu erhalten, ist es von Vorteil, wenn die Lichtleitstäbe eines Lichtleitstab-Paketes miteinander verbunden, vorzugsweise miteinander verschmolzen sind.

Ebenso kann es von Vorteil sein, wenn die Lichtleitstäbe eines Faserstabes miteinander verbunden, vorzugsweise miteinander verschmolzen sind.

Weiters ist es von Vorteil, wenn die Faserstäbe eines Faserstab-Paketes miteinander verbunden, vorzugsweise miteinander verschmolzen sind.

Auf diese Weise ergeben sich mechanisch homogene Faserstäbe bzw. mechanisch homogene Faserstab-Pakete.

Bei einer konkreten, platzsparenden Ausführungsform der Erfindung ist vorgesehen, dass die Lichtleitstäbe eines Lichtleitstab-Paketes und/oder die Faserstäbe eines Faserstab-Paketes parallel zueinander verlaufen.

Die Lichtleitstäbe bzw. Faserstäbe verlaufen somit vorzugsweise parallel, können prinzipiell aber natürlich beliebig gekrümmt sein.

Weiters ist vorgesehen, dass das zumindest eine Lichtleitstab-Paket in einem Lichtquellen-Abstand zu den Lichtquellen angeordnet ist, wobei das zumindest eine Lichtleitstab-Paket vorzugsweise zu allen zugeordneten Lichtquellen denselben Abstand aufweist.

Der Lichtquellen-Abstand ist dabei der Normalabstand der Lichtaustrittsfläche der Lichtquelle zu der Lichteinkoppelfläche des Lichtleitstab-Paketes, welche Lichteinkoppelfläche des Lichtleitstab-Paketes von den Lichteinkoppelflächen der Lichtleitstäbe bzw. den Lichteinkoppelflächen der Faserstäbe gebildet wird.

Vorzugsweise ist, wie eingangs schon beschrieben, genau ein Lichtleitstab/Faserstab-Paket vorgesehen, in welches Paket alle Lichtquellen Licht einkoppeln. In dem Fall, dass zwei oder mehrere Lichtleitstab/Faserstab-Pakete vorgesehen sind, welche nebeneinander liegen, ist vorzugsweise vorgesehen, dass alle Pakete denselben Abstand zu den ihnen jeweils zugeordneten Lichtquellen aufweisen.

Von besonderem Vorteil ist es, wenn der Lichtquellen-Abstand gegen Null geht oder vorzugsweise Null ist.

Auf diese Weise kann sicher gestellt werden, dass Licht tatsächlich nur in die zugeordneten Lichtleitstäbe eingekoppelt wird, also in Lichtleitstäbe, welche Licht direkt in die zugeordnete Lichtführung einkoppeln oder zwar teilweise oder ganz an der zugeordneten Lichtführung vorbei, aber nicht in eine andere, nicht zugeordnete Lichtführung. Mit "zulässige" Lichtleitstäbe werden solche Lichtleitstäbe bezeichnet, die zwar Licht aus einer Lichtquelle nicht oder nur teilweise in die der Lichtquelle zugeordnete Lichtführung einkoppeln, deren Licht aber auch nicht in eine andere Lichtführung einkoppeln. Dies lässt sich dadurch, dass die Lichtaustrittsflächen benachbarter Leuchtdioden zueinander beabstandet sind, realisieren.

Ein Übersprechen von Licht und Lichtverluste können auf diese Weise vermieden oder zumindest minimiert werden.

Weiters ist vorgesehen, dass das zumindest eine Lichtleitstab-Paket in einem Lichtführungseinheit-Abstand zu den Lichteinkoppelflächen der Lichtführungseinheit angeordnet ist, wobei dieser Lichtführungseinheit-Abstand vorzugsweise wieder Null ist.

Durch ein direktes Anliegen der Lichtführungen an dem Paket können wieder ein Lichtverluste und/ oder ein Übersprechen vermieden oder zumindest minimiert werden.

Eine Beabstandung der Lichtquellen von den Lichtführungen wird im Stand der Technik verwendet, um die Lichtführungen thermisch zu entkoppeln. Dabei haben sich allerdings Streuverluste und Übersprechprobleme, also das Einkoppeln von Licht aus Lichtquellen in nicht zugeordnete Lichtführungen durch den Abstand ergeben. Durch das Zwischenschalten eines Lichtleitstab-Paketes kann dieses Problem beseitigt werden, gleichzeitig sind die Lichtquellen und die Lichtführungen thermisch entkoppelt. Um ein Übersprechen und Streuverluste nunmehr zwischen Lichtquellen - Lichtleitstabpaket und Lichtleitstab-Paket - Lichtführungen zu vermeiden, ist vorzugsweise vorgesehen, dass zwischen diesen Einheiten jeweils ein Abstand Null vorgesehen ist.

In den Lichtleitstäben pflanzt sich Licht in Folge Totalreflexion fort. Lichtstrahlen, welche die Totalreflexionsbedingung nicht erfüllen, also in einem Winkel kleiner dem Grenzwinkel für Totalreflexion auf den Mantel des Lichtleitstabes auftreffen, treten aus dem Lichtleitstab, in welchen sie eingekoppelt wurden, aus. Damit diese Lichtstrahlen nicht in eine nicht zugeordnete Lichtführung einkoppeln, ist vorzugsweise weiters vorgesehen, dass die Dicke des zumindest einen Lichtleitstab-Paketes, d.h. der Abstand zwischen der den Lichtquellen zugewandten Fläche des Lichtleitstab-Paketes und der der Lichtführungseinheit zugewandten Fläche des Lichtleitstab-Paketes, einen definierten Minimalwert aufweist oder überschreitet, welcher Minimalwert derart gewählt ist, dass Licht, welches aus einem einer Lichtquelle zugeordneten Lichtleitstab seitlich austritt, höchstens in zulässige Lichtleitstäbe gelangt.

In diesem Sinne ist es auch eine höhere Anzahl (größere Dichte) an Lichtleitstäben von Vorteil - je mehr Lichtleiterstäbe ein Lichtstrahl quer durchlaufen muss, in welche er aufgrund der Nichterfüllung der Totalreflexionsbedingung eintritt, umso schwächer wird dieser. Wird ein Lichtstrahl auf diese Weise ausreichend stark abgeschwächt, bevor er in eine nicht zugeordnete Lichtführung eintritt, dann ist er bereits so schwach, dass seine Intensität vernachlässigbar klein ist.

Die Dicke muss auch derart gewählt werden, dass eine ausreichende thermische Entkopplung der Lichtführungen von den Lichtquellen realisiert ist. Die Dicke ist somit auch abhängig vom verwendeten Material des Lichtleitstab-Paketes bzw. dessen Wärmeleitkoeffizienten. Typischerweise liegt die Dicke im Bereich von einigen wenigen Millimetern.

Bei einer konkreten Ausführungsform ist vorgesehen, dass das zumindest eine Lichtleitstab-Paket in Form eines plattenförmigen Elementes ausgebildet ist.

Typischerweise ist vorgesehen, dass genau ein einziges Lichtleitstab-Paket vorgesehen ist. Es kann aber auch vorgesehen sein, dass in Lichtaustrittsrichtung hintereinander, unmittelbar aneinander anliegend zwei oder mehrere Lichtleitstab-Pakete angeordnet sind.

Es wird somit quasi ein Stapel von zwei oder mehreren in Lichtaustrittsrichtung hintereinander liegenden Paketen gebildet.

Die Lichtleitfasern haben typischerweise über ihren Radius gesehen einen konstanten Brechungsindex. Das Kernmaterial des Lichtleiterstabes hat also, schreitet von der Längsmittelgeraden des Lichtleitstabes in einem Schnitt normal auf diese Längsmittelgerade nach Außen Richtung Mantel des Lichtleitstabes, einen konstanten Brechungsindex.

Es kann aber auch von Vorteil sein, wenn die Lichtleitstäbe als Gradienten-Lichtleitstäbe ausgebildet sind. Bei solchen Gradienten-Lichtleitstäben ist der Brechungsindex des Kernmaterials nicht, wie oben beschrieben, konstant, sondern verringert sich nach Außen hin. Dadurch bewegt sich ein Lichtstrahl in dem Lichtleitstab zwischen zwei Reflexionen nicht geradlinig, sondern folgt einem quasi sinusförmigen Verlauf, sodass auch steil einfallende Lichtstrahlen, welche unter Umständen die Totalreflexionsbedingung nicht erfüllen werden, derart abgelenkt werden, dass sie am Randbereich des Lichtleitstabes nicht aus diesem austreten.

Weiters ist mit Vorteil vorgesehen, dass die Lichtquellen LED-Lichtquellen sind, wobei jede LED-Lichtquelle zumindest eine Leuchtdiode umfasst.

Vorzugsweise ist jede LED-Lichtquelle getrennt ansteuerbar und ein- bzw. ausschaltbar und/oder dimmbar ist, wobei vorzugsweise jede Leuchtdiode einer LED-Lichtquelle getrennt ansteuerbar und ein- bzw. ausschaltbar und/ oder dimmbar ist.

Im Folgenden ist die Erfindung an Hand der Zeichnung an einer beispielhaften Ausführungsform näher erörtert. In dieser zeigt
Fig. 1 eine schematische Explosionsdarstellung einer erfindungsgemäßen Leuchteinheit in einer perspektivischen Ansicht,
Fig. 2 eine schematische Explosionsdarstellung einer erfindungsgemäßen Leuchteinheit im Bereich eines Lichtleitstab-Paketes,
Fig. 3 eine Detailansicht eines Faserstabes mit mehreren Lichtleitstäben,
Fig. 4 eine Lichtquelle und schematisch deren Abstrahlcharakteristik, und
Fig. 5 zwei Lichtquellen mit vorgeschaltetem Lichtleitstab-Paket.

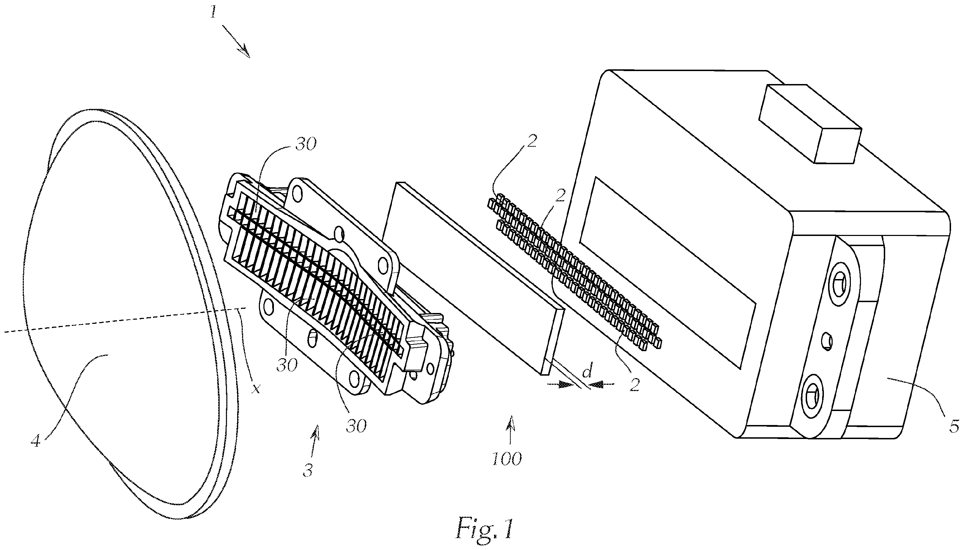

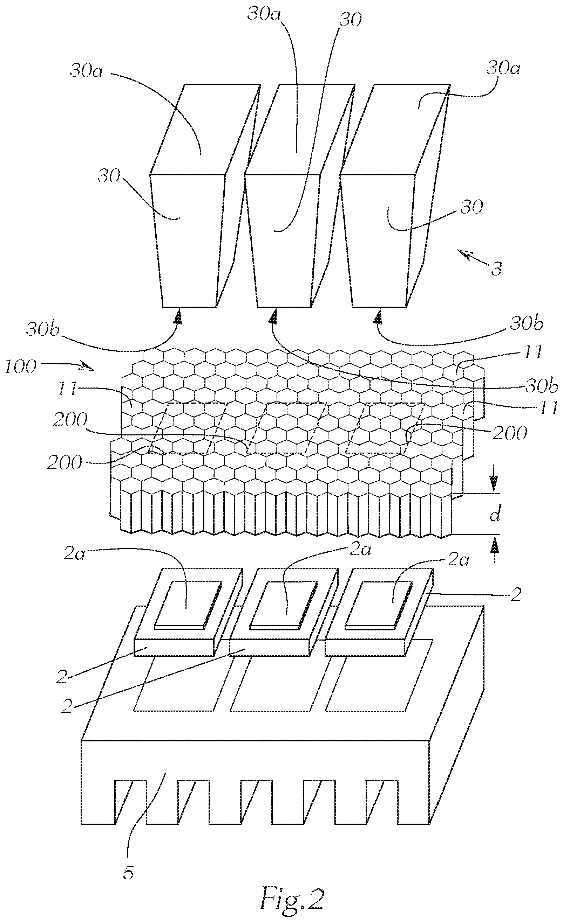

Figur 1 zeigt eine erfindungsgemäße Leuchteinheit 1 für einen Kraftfahrzeugscheinwerfer, bestehend aus einer Mehrzahl von Lichtquellen 2, einer Lichtführungseinheit 3 mit einer Mehrzahl von Lichtführungen 30 und einer nachgeschalteten Projektionslinse 4. Jede Lichtführung 30 weist eine Lichtauskoppelfläche 30a auf, und über eine Lichteinkoppelfläche 30b koppelt jede Lichtquelle 2 Licht genau in die ihr zugeordnete Lichtführung 30 ein (siehe dazu insbesondere Figur 2). Die Lichtquellen 2 sind auf einem gemeinsamen Träger 5, beispielsweise einem Kühlkörper angeordnet.

Bei den Lichtquellen 2 handelt es sich um LED-Lichtquellen, wobei jede LED-Lichtquelle 2 zumindest eine oder - wie in dem vorliegenden Beispiel - genau eine Leuchtdiode umfasst. Eine solche Leuchtdiode 2 weist dabei eine Lichtaustrittsfläche 2a auf. Vorzugsweise ist dabei jede LED-Lichtquelle 2 getrennt ansteuerbar und ein- bzw. ausschaltbar und/oder dimmbar.

Die Lichtführungen 30 sind in der Lichtführungseinheit 3 nebeneinander und in dem gezeigten Beispiel aus Figur 1 in drei übereinander liegenden Reihen angeordnet. Die Lichtführungen 30 sind dabei im Wesentlichen in Richtung einer der Projektionslinse 4 zugehörigen optischen Achse x ausgerichtet.

Bei der gezeigten Ausführungsform nach Figur 1 sind die Lichtführungen 30 als Reflektoren ausgeführt, bilden also quasi ein hohles Rohr, und weisen Lichtauskoppelflächen auf, die dazu eingerichtet sind, das Licht in Richtung der nachgeschalteten Projektionslinse 4 abzustrahlen. Die Lichtauskoppelflächen ebenso wie die Lichteinkoppelflächen sind somit begrenzte Öffnungen in der Lichtführungseinheit 3.

In Figur 2 hingegen sind die Lichtführungen als totalreflektierende optische Elemente, z.B. Kunststoff- oder Glaskörper ausgebildet, in welche aus den Lichtaustrittsflächen 2a der jeweils zugeordneten Leuchtdioden 2 austretendes Licht in die Lichteinkoppelflächen 30b eingekoppelt wird, sich in den optischen Elementen (Lichtführungen) 30 totalreflektierend fortpflanzt und über die Lichtaustrittsflächen 30a austritt und mittels der Linse 4 in einen Bereich vor der Leuchteinheit abgestrahlt wird.

Die unterschiedliche Wahl der Ausgestaltung der Lichtführungen in Figur 1 und Figur 2 soll einerseits zum Ausdruck bringen, dass es für die Erfindung unerheblich ist, in welcher Form die Lichtführungen ausgebildet sind, und andererseits bietet die Ausführungsform nach Figur 2 eine übersichtlichere Möglichkeit der Erörterung der Erfindung.

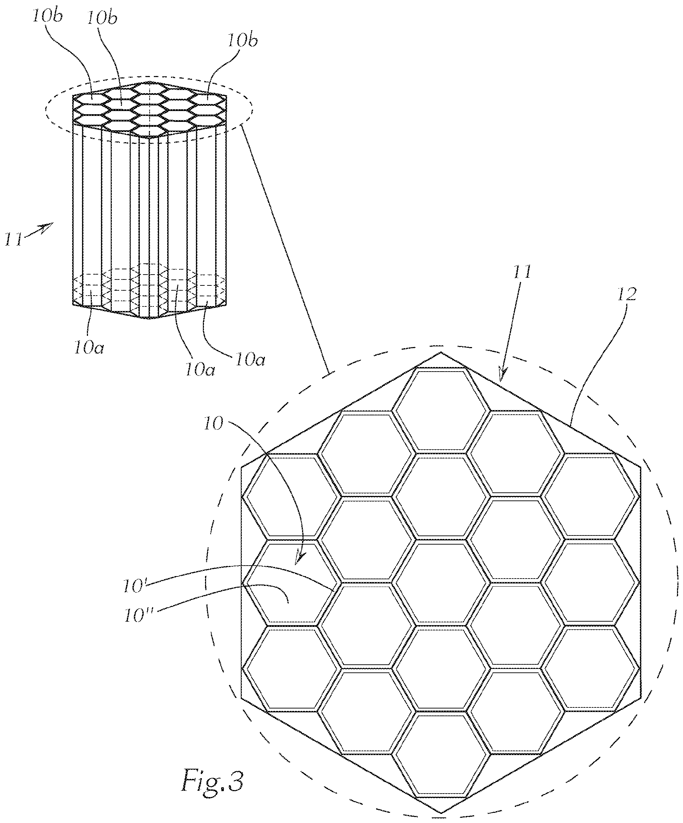

Um bei den beispielsweise in Figur 1 und 2 gezeigten Lichtführungseinheiten 30 zu vermeiden, dass es auf Grund der thermischen und optischen Belastungen insbesondere im Bereich der Lichteinkoppelstellen der Lichtführungen durch die von den Lichtquellen erzeugte Strahlung und Wärme leicht zu Beschädigungen oder Zerstörungen der Lichtführungseinheit kommt, ist vorgesehen, dass zwischen den Lichtquellen 2 und den Lichteinkoppelflächen 30b der Lichtführungen 30 ein optisches Element 100 vorgesehen ist. Bei diesem optischen Element 100 handelt es sich, wie in Figur 2 in Zusammenschau mit Figur 3 gut zu erkennen um ein sogenanntes Lichtleitstab-Paket 100, welches aus einer Anzahl bzw. Vielzahl von Lichtleitstäben 10 (Figur 3) besteht, welche Lichtleitstäbe 10 zu dem Lichtleitstab-Paket 100 zusammengefasst sind. Bei dem Lichtleitstab-Paket 100 handelt es sich dabei beispielsweise wie gezeigt um ein plattenförmiges Element.

Das Paket 100 besteht bei der in Figur 2 gezeigten Ausführungsform aus einer Anzahl an Faserstäben 11, wobei jeder Faserstab 11 wiederum aus einer Anzahl von Lichtleitstäben 10 besteht, wie dies in Figur 3 gezeigt ist. Eine Anzahl an Lichtleitstäben 10 ist somit jeweils zu einem Faserstab 11 zusammengefasst, und mehrere bzw. eine Vielzahl an Faserstäben 11 bildet das Lichtleitstab-Paket 100 (auch als Faserstab-Paket bezeichnet, bzw. im Folgenden auch nur als "Paket" bezeichnet).

Typischerweise sind 7, 19, 37, 61, 91 usw. Lichtleitstäbe in einem Faserstab angeordnet.

Um eine möglichst dichte Packung der Lichtleitstäbe 10 zu erreichen, ist vorgesehen, dass die Lichtleitstäbe 10 einen hexagonalen Querschnitt aufweisen. Ebenso weisen die Faserstäbe 11 vorzugsweise einen hexagonalen Querschnitt auf.

Prinzipiell kann aber auch vorgesehen sein, dass bei der Fertigung des Paketes 100 die Lichtleitstäbe nicht vorerst zu Faserstäben zusammengefasst sind, sondern dass aus den Lichtleitstäben direkt das Paket 100 hergestellt wird. Fertigungstechnisch und hinsichtlich der mechanischen Stabilität kann es aber von Vorteil sein, die Lichtleitstäbe 10 wie in Figur 3 gezeigt vorerst zu Faserstäben 11 zusammen zu fassen.

Bei der in Figur 3 gezeigten Ausführungsform ist weiters vorgesehen, dass die Lichtleitstäbe 10 eines Faserstabes 11 von einer Hülle 12, vorzugsweise einer Glashülle umgeben sind. Eine solche Glashülle kann wie in der DE 10 2010 052 479 A1 beschrieben zum Zusammenhalten der Lichtleitstäbe 10 beim Fertigungsprozess der Faserstäbe vorgesehen sein und wird dann Bestandteil des Faserbündels 11.

Um optimale total reflektierende Eigenschaften der Lichtleitstäbe 10 zu erreichen, sind beispielsweise die Lichtleitstäbe 10 in Form von Stab-Rohr-Systemen aus Glas ausgebildet, mit einem Mantelglas 10' als Rohr und einem Kernglas 10" als Stab, wobei das Kernglas 10" von dem Mantelglas 10' ummantelt ist. Das Kernglas 10" weist dabei einen Brechungsindex auf, der größer ist als der Brechungsindex des Mantelglases 10'. Auf diese Weise wird eine Übertragung von Licht in Folge von Reflexion an den Grenzflächen des inneren und des äußeren Glases in einem Lichtleitstab 10 möglich.

Um ein mechanisch stabiles Paket zu erhalten, ist es von Vorteil, wenn die Lichtleitstäbe 10 eines Faserstabes 11 miteinander verbunden, vorzugsweise miteinander verschmolzen sind. Weiters ist es von Vorteil, wenn die Faserstäbe 11 eines Faserstab-Paketes 100 miteinander verbunden, vorzugsweise miteinander verschmolzen sind. Auf diese Weise ergeben sich mechanisch homogene Faserstäbe 11 bzw. ein mechanisch homogenes Faserstab-Pakete 100. Die Lichtleitstäbe 10 bzw. Faserstäbe 11 des Lichtleitstab-Paketes 100 verlaufen parallel zueinander, wie dies in Figur 2 gut zu erkennen ist. Somit ergibt sich ein Paket 100 mit einer Dicke d.

Durch die Zwischenschaltung des optischen Elementes in Form eines Lichtleitstab-Paketes 100 zwischen die Lichtquellen 2 und die Lichtführungseinheit 30 kann die Lichtführungseinheit 30 thermisch von den Lichtquellen 2 entkoppelt werden, sodass es zu keinen thermischen Beeinträchtigungen der Lichtführungseinheit 30 durch die Lichtquellen 2 kommt.

Durch den erfindungsgemäßen Aufbau des zwischengeschalteten Elementes in Form eines Lichtleitstab-Paktes 100, welches aus einer Vielzahl an Lichtleitstäben 10 besteht, in welchen sich das eingespeiste Licht mittels Totalreflexion fortpflanzt, kann eine Lichtquelle 2 möglichst exakt auf die Lichteinkoppelstelle 30b der ihr zugeordneten Lichtführung 30 abgebildet werden, sodass vermieden wird, dass eine Lichtquelle 2 Licht in eine andere als die ihr zugeordnete Lichtführung einkoppelt.

Je geringer dabei der Querschnitt der einzelnen Lichtleitstäbe 10 ist, d.h. umso mehr Lichtleitstäbe 10 für die Abbildung einer Lichtquelle 2 (d.h. ihrer Lichtaustrittsfläche 2a) auf die zugeordnete Lichteinkoppelstelle 30b der Lichtführung 30 sorgen, umso exakter wird dabei die Lichtaustrittsfläche 2a auf die Lichteinkoppelstelle 30b abgebildet.

Dadurch, dass die Lichtquellen 2 bzw. deren Lichtaustrittsflächen 2a in der Regel nicht unmittelbar aneinander angrenzen sondern einen gewissen Abstand zueinander aufweisen, wie dies in Figur 2 zu erkennen ist, ist bei entsprechend geringem Durchmesser der Lichtleitstäbe 10 auch zuverlässig dafür gesorgt, dass eine Lichtquelle 2 nicht, auch nicht in geringem Ausmaß (bzw. nur in einem nicht relevanten Ausmaß), Licht in eine nicht zugeordnete Lichtführung 30 einkoppelt.

Dabei ist auch zu berücksichtigen, dass sich die Lichtführungen 30 wie in Figur 2 zu erkennen in der Regel zu den Lichtquellen 2 hin verjüngen, d.h. die Lichteinkoppelfläche 30b einer Lichtführung ist kleiner als ihre Lichtauskoppelfläche 30a. Die Lichteinkoppelflächen 30b bzw. Lichteinkoppelstellen 30b benachbarter Lichtführungen sind daher zueinander beabstandet.

Es können natürlich auch Lichtführungen vorgesehen sein, die sich nicht verjüngen, wobei benachbarte Lichteinkoppelstellen allerdings einen gewissen Abstand aufweisen.

Jede Lichtquelle 2 koppelt nun Licht im Wesentlichen ausschließlich bzw. tatsächlich ausschließlich in die Lichtleitstab-Einkoppelstellen 10a von der jeweiligen Lichtquelle 2 zugeordneten Lichtleitstäben 10 ein, und das aus den Lichtleitstab-Auskoppelstellen 10b austretende Licht einer zugeordneten Lichtquelle 2 im Wesentlichen ausschließlich bzw. tatsächlich ausschließlich in die Lichteinkoppelfläche 30b der der jeweiligen Lichtquelle 2 zugeordneten Lichtführung 30 eingekoppelt.

Wie in Figur 2 grob schematisch gezeigt, koppelt jede Lichtaustrittsfläche Licht in Lichtleitstäbe 10 ein, welche innerhalb eines (gedachten) Rechtecks 200 liegen. Die Lichteinkoppelflächen 30b sind üblicherweise größer als die Lichtaustrittsflächen 2a, beispielhafte typische Werte sind für die Lichtaustrittfläche 2a ca. 0,7mm x 0,7mm, jene für eine Lichteinkoppelfläche 30b ca. 1mm x 1mm, sodass üblicherweise auch in dem Fall, dass Licht von einer Lichtaustrittsfläche 2a in einen Lichtleitstab eingekoppelt wird, welcher nicht mehr oder nur noch teilweise der Lichtaustrittsfläche 2a gegenüber liegt, das Licht in die zugeordnete Lichteinkoppelfläche 30b eingekoppelt wird.

Außerdem, nachdem die Lichteinkoppelflächen 30b einen Abstand zueinander aufweisen, kann bei ausreichend hoher Anzahl von Lichtleitstäben, also bei hoher Auflösung sichergestellt werden, dass Licht einer Lichtquelle nicht in eine nicht zugeordnete Lichtführung gelangt, auch wenn manche Lichtleitstäbe Licht nicht oder nur teilweise in die zugeordnete Lichtführung einkoppeln.

Unter "einer Lichtquelle zugeordneter Lichtleitstab" versteht man also einen Lichtleitstab, der Licht vollständig in die zugeordnete Lichtführung einkoppelt. Weiters können darunter auch noch Lichtleitstäbe verstanden werden, welche Licht nicht oder nur teilweise in die zugeordnete Lichtführung einkoppeln, ohne aber Licht in eine nicht zugeordnete Lichtführung einzukoppeln ("zulässige" Lichtleitstäbe). Je größer die Anzahl der Lichtleitstäbe pro Flächeneinheit ist, umso weniger "zulässige" Lichtleitstäbe treten auf und umso mehr Licht der Lichtquelle gelangt in die zugeordnete Lichtführung.

Weiters ist vorgesehen, dass das Lichtleitstab-Paket 100 in einem Lichtquellen-Abstand zu den Lichtquellen 2 angeordnet ist, wobei das Lichtleitstab-Paket 100 vorzugsweise zu allen zugeordneten Lichtquellen 2 denselben Abstand aufweist, also parallel zu der Ebene der Lichtaustrittsflächen 2a liegt.

Der Lichtquellen-Abstand ist dabei der Normalabstand der Lichtaustrittsfläche 2a der Lichtquelle 2 zu der Lichteinkoppelfläche des Lichtleitstab-Paketes 100, welche Lichteinkoppelfläche des Lichtleitstab-Paketes 100 von den Lichteinkoppelflächen 10a der Lichtleitstäbe gebildet wird.

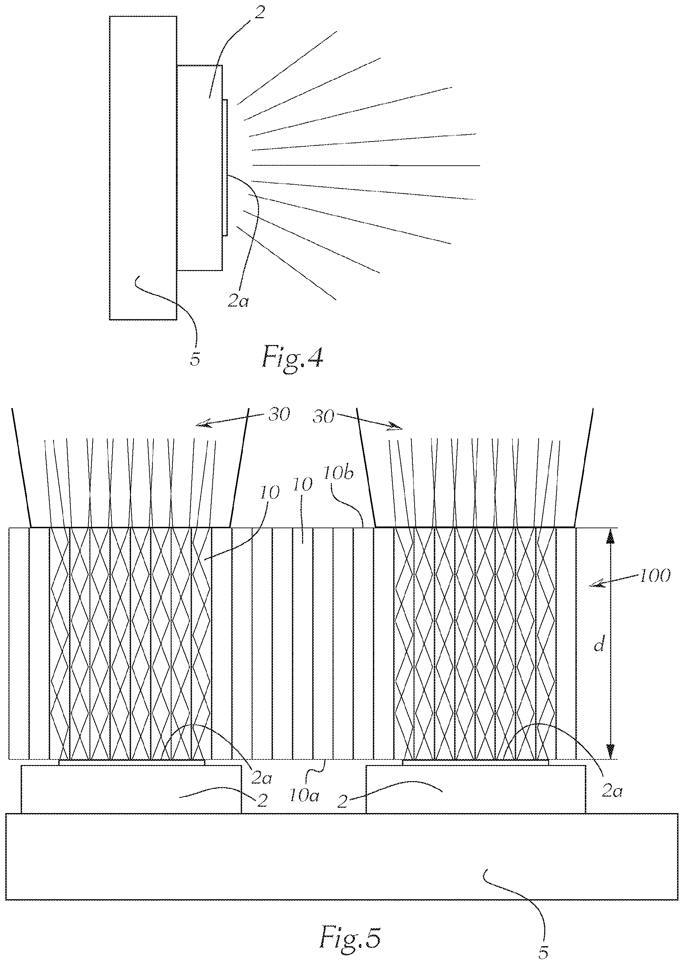

Von besonderem Vorteil ist es dabei, wenn der Lichtquellen-Abstand gegen Null geht oder vorzugsweise Null ist, wie dies in Figur 5 gezeigt ist. Eine Leuchtdiode 2 weist nämlich ein räumliches Abstrahlverhalten ab, wie dies in Figur 4 grob schematisch skizziert ist und hinlänglich bekannt ist. Durch die Anordnung der Leuchtfläche 2a möglichst nahe an den Lichtleitstäben wie in Figur 5 dargestellt kann erreicht werden, dass Licht tatsächlich nur in die zugeordneten bzw. zusätzlich noch maximal in "zulässige" Lichtleitstäbe 10 eingekoppelt wird.

Weiters ist vorgesehen, dass das Lichtleitstab-Paket 100 in einem Lichtführungseinheit-Abstand von vorzugsweise Null zu den Lichteinkoppelflächen 30b der Lichtführungseinheit 3 angeordnet ist.

In den Lichtleitstäben 10 pflanzt sich Licht in Folge von Totalreflexion fort, wie dies in Figur 5 gezeigt ist. Dabei sei darauf hingewiesen, dass zur besseren Erkenntlichkeit der schematischen Strahlengänge in Figur 5 die Lichtleitstäbe 10 nicht maßstabsgetreu, mit (wesentlich) größerem Durchmesser als tatsächlich eingezeichnet sind (Ein Lichtleitstab 10 aus Figur 5 weist in etwa einen Durchmesser auf wie ein Faserstab 11 aus Figur 2.). Auch der in Figur 3 gezeigte Aufbau der Lichtleitstäbe aus Mantel und Kern ist in Figur 5 der übersichtlicheren Darstellung halber nicht eingezeichnet.

Lichtstrahlen, welche die Totalreflexionsbedingung nicht erfüllen, also in einem Winkel kleiner dem Grenzwinkel für Totalreflexion auf den Mantel des Lichtleitstabes 10 auftreffen, treten aus dem Lichtleitstab 10, in welchen sie eingekoppelt wurden, aus. Damit diese Lichtstrahlen nicht in eine nicht zugeordnete Lichtführung einkoppeln, ist vorzugsweise weiters vorgesehen, dass die Dicke d des Lichtleitstab-Paketes 100, d.h. der Abstand zwischen der den Lichtquellen 2 zugewandten Fläche des Lichtleitstab-Paketes 100 und der der Lichtführungseinheit 3 zugewandten Fläche des Lichtleitstab-Paketes 100, einen definierten Minimalwert aufweist oder überschreitet, welcher Minimalwert derart gewählt ist, dass Licht, welches aus einem einer Lichtquelle zugeordneten Lichtleitstab seitlich austritt, höchstens in zulässige Lichtleitstäbe gelangt. Dies entspricht Lichtleitstäben mit einem Durchmesser von ca. 100 µm.

In diesem Sinne ist es auch eine höhere Anzahl (größere Dichte) an Lichtleitstäben von Vorteil - je mehr Lichtleiterstäbe ein Lichtstrahl quer durchlaufen muss, in welche er aufgrund der Nichterfüllung der Totalreflexionsbedingung eintritt, umso schwächer wird dieser. Wird ein Lichtstrahl auf diese Weise ausreichend stark abgeschwächt, bevor er in eine nicht zugeordnete Lichtführung eintritt, dann ist er bereits so schwach, dass seine Intensität vernachlässigbar klein ist.

Die Dicke d muss auch derart gewählt werden, dass eine ausreichende thermische Entkopplung der Lichtführungen von den Lichtquellen realisiert ist. Die Dicke d ist somit auch abhängig vom verwendeten Material des Lichtleitstab-Paketes bzw. dessen Wärmeleitkoeffizienten. Typischerweise liegt die Dicke d im Bereich von einigen wenigen Millimetern.

Grundsätzlich können die Lichtaustrittsflächen 2a einer Leuchtdiode beliebige Form annehmen. Typische Formen sind allerdings rechteckig oder quadratisch. Beispielsweise hat bei einem typischerweise verwendeten LED-Chip vom Typ Osram Compact LED-Chip die Lichtaustrittsfläche (leuchtende Fläche) 2a eine quadratische Form (wobei eine Ecke nach Innen abgerundet ausgebildet ist) mit Seitenlängen von ca. 0,7 mm. Bei einer konkreten Anordnung solcher LED-Chips sind diese in 3 Reihen und mehreren Spalten angeordnet, benachbarte LED-Chips in einer Reihe sind ca. 2mm zueinander beabstandet. Die Reihen selbst sind zueinander ebenfalls 2 mm (oberste und mittlere Reihe) bzw. 2,5 mm (mittlere Reihe und untere Reihe) zueinander beabstandet. Der Abstand wird dabei immer vom Zentrum zweier benachbarter LED-Chips zueinander gemessen, wobei das Zentrum der Mittelpunkt des die Lichtaustrittsflächen begrenzenden Quadrates ist. Die oben genannten Masse sind dabei typische Werte einer konkreten Anwendung und dienen hier zur beispielhaften Veranschaulichung der Abmessungen. Bei dem oben genannten Beispiel ergibt sich eine Lichtaustrittsfläche von ca. 0,49 mm².

Bei einer gut funktionierenden Ausführungsform sind in etwa 50 - 100 Lichtleitstäbe für eine Lichtaustrittsfläche vorgesehen. Dies entspricht Lichtleitstäben mit einem Durchmesser von ca. 100 µm. (Geht man zur vereinfachten Berechnung von Lichtleitstäben mit Kreisquerschnitt aus, deren Flächen die Lichtaustrittsfläche idealisiert vollständig bedecken, so kommt man bei 0,49 mm² Lichtaustrittsfläche bei einem Durchmesser der Lichtleitstäbe von 100 µm auf ca. 62 Lichtleitstäbe für diese Lichtaustrittsfläche.)

Theoretisch sind auch weniger Lichtleitstäbe denkbar, und insbesondere ist auch genau ein Lichtleitstab pro Lichtaustrittsfläche möglich. Dieser muss dann allerdings möglichst exakt in Hinblick auf die Form der Lichtaustrittsfläche gestaltet sein und außerdem sehr exakt positioniert sein, wodurch in nachteiliger Weise Fertigungs- und Montagetoleranzen wieder an Bedeutung gewinnen, und der Zusammenbau aufwändiger wird.

Somit ist es grundsätzlich von Vorteil, eine hohe Anzahl an Lichtleitstäben pro Lichtquelle zu verwenden. Es ist also von Vorteil, wenn jeder Lichtquelle 2 eine Vielzahl an Lichtleitstäben 10 zugeordnet ist. Sind diese Lichtleitstäbe in einem (oder mehreren Lichtleitstab-Paketen) zusammengefasst, besteht auch das Paket (oder jedes der Pakete) aus einer Vielzahl an Lichtleitstäben.

Insbesondere ist es von Vorteil, wenn die Anzahl der Lichtleitstäbe pro Lichtaustrittsfläche/Lichtquelle ≥ 10 ist. Beispielsweise haben sich 50 - 100 Lichtleitstäbe pro Lichtaustrittsfläche als zweckmäßig erwiesen.

Noch besser kann die Lichtaustrittsfläche auf die zugeordnete Lichtführung abgebildet werden, wenn die Anzahl der Lichtleitstäbe ≥ 100, vorzugsweise ≥ 1000 ist, wobei sich eine Anzahl von ca. 5000 - 10000 Lichtleitstäben pro Lichtaustrittsfläche bewährt hat. (Bei dem obigen Beispiel ergeben sich für einen Lichtleitstab mit 10 µm ca. 6242 Lichtleitstäbe für die Lichtaustrittsfläche.)

Die Zusammenfassung der Lichtleitstäbe 10 in einem Lichtleitstab-Paket 100 bzw. der Faserstäbe 11 in einem einzigen Faserstab-Paket 100 hat den Vorteil, dass beim Zusammenbau der erfindungsgemäßen Leuchteinheit Toleranzen und Ungenauigkeiten beim Zusammenbau nicht oder nur in geringem Ausmaß berücksichtigt werden müssen, anders, als dies der Fall wäre, wenn beispielsweise zwischen jeder Lichtquelle und jeder Lichteinkoppelstelle einer Lichtführung nur ein einziger total reflektierender Lichtleitkörper angeordnet wäre.

Dies hat den Vorteil, dass lediglich ein einziges zusätzliches optisches Element zwischen die Lichtquellen und die Lichtführungseinheit eingebaut werden muss, bei welchem - bei ausreichend hoher Anzahl an Lichtleitstäben - ein seitliches Verrutschen des optischen Elementes in Richtungen normal auf eine Normale auf die Lichtaustrittsflächen der Lichtquellen völlig unerheblich ist, da bei ausreichend hoher Auflösung (d.h. ausreichend hoher Anzahl an Lichtleitstäben) die Lichtaustrittsfläche nahezu 1:1 auf die Lichteinkoppelstelle der zugeordneten Lichtführung abgebildet wird und nur geringe Mengen an Licht in benachbarte Lichtleitstäbe gelangt, welche Licht nicht in die zugeordnete Lichteinkoppelstelle einkoppeln. Dieses Licht gelangt außerdem zu einem Großteil bzw. gar nicht in nicht zugeordnete Lichtführungen, sodass sich auch keine nachteiligen optischen Effekte ergeben können.

Mit der Erfindung können also wie vorstehend beschrieben in optimaler Weise die Lichtführungen bzw. die Lichtführungseinheit von den Lichtquellen thermisch entkoppelt werden. Von Vorteil ist es daher, wenn für die Lichtleitstäbe und somit für ein Lichtleitstab- bzw. Faserstab-Paket ein schlecht wärmeleitendes Material verwendet wird, in dem sich Licht mittels Totalreflexion fortpflanzen kann. Wie oben bereits erwähnt, eignet sich hierzu beispielsweise Glas gut.

## Patentansprüche

1. Leuchteinheit (1) für einen Scheinwerfer, insbesondere einen Kraftfahrzeugscheinwerfer, wobei die Leuchteinheit (1) eine Mehrzahl von Lichtquellen (2), eine Lichtführungseinheit (3) und eine nachgeschaltete Projektionslinse (4) umfasst, wobei die Lichtführungseinheit (3) eine Mehrzahl von Lichtführungen (30) aufweist, wobei jede Lichtführung (30) je eine Lichtauskoppelfläche (30a) und je eine Lichteinkoppelfläche (30b) aufweist, und wobei jede Lichtquelle (2) Licht genau in eine ihr zugeordnete Lichtführung (30) über jeweils eine Lichteinkoppelfläche (30b) einkoppelt,
**dadurch gekennzeichnet, dass**
zwischen den Lichtquellen (2) und den Lichteinkoppelflächen (30b) der Lichtführungen (30) Lichtleitstäbe (10) angeordnet sind, welche Lichtleitstäbe (10) zu zumindest einem Lichtleitstab-Paket (100) zusammengefasst sind, wobei jeder Lichtquelle (2) eine Vielzahl an Lichtleitstäben (10) zugeordnet ist und wobei jede Lichtquelle (2) Licht im Wesentlichen ausschließlich in die Lichtleitstab-Einkoppelstellen (10a) der der jeweiligen Lichtquelle (2) zugeordneten Lichtleitstäbe (10) einkoppelt, und wobei das aus den Lichtleitstab-Auskoppelstellen (10b) austretende Licht einer zugeordneten Lichtquelle (2) im Wesentlichen ausschließlich in die Lichteinkoppelfläche (30b) der der jeweiligen Lichtquelle (2) zugeordneten Lichtführung (30) einkoppelt.

2. Leuchteinheit nach Anspruch 1, **dadurch gekennzeichnet, dass** eine Anzahl von Lichtleitstäben (10) zu einem Faserstab (11) zusammengefasst ist, und dass das zumindest eine Lichtleitstab-Paket (100) aus einer Anzahl solcher Faserstäbe besteht, sodass jede Lichtquelle (2) Licht in eine Anzahl solcher Faserstäbe (11) einkoppelt.

3. Leuchteinheit nach Anspruch 1 oder 2, **dadurch gekennzeichnet, dass** Lichtleitstäbe (10) zu genau einem Lichtleitstab-Paket (100) zusammengefasst sind.

4. Leuchteinheit nach einem der Ansprüche 1 bis 3, **dadurch gekennzeichnet, dass** die Lichtleitstäbe (10) einen quadratischen oder vorzugsweise hexagonalen Querschnitt aufweisen.

5. Leuchteinheit nach einem der Ansprüche 2 bis 4, **dadurch gekennzeichnet, dass** die Faserstäbe (11) einen quadratischen oder vorzugsweise hexagonalen Querschnitt aufweisen.

6. Leuchteinheit nach einem der Ansprüche 1 bis 5, **dadurch gekennzeichnet, dass** die Lichtleitstäbe (10) in Form von Stab-Rohr-Systemen aus Glas ausgebildet sind, mit einem Mantelglas (10') als Rohr und einem Kernglas (10") als Stab, wobei das Kernglas (10") von dem Mantelglas (10') ummantelt ist, wobei vorzugsweise das Kernglas (10") einen Brechungsindex aufweist, der größer ist als der Brechungsindex des Mantelglases (10').

7. Leuchteinheit nach einem der Ansprüche 1 bis 6, **dadurch gekennzeichnet, dass** die Lichtleitstäbe (10) eines Lichtleitstab-Paketes (100) und/oder die Faserstäbe (11) eines Faserstab-Paketes (100) parallel zueinander verlaufen.

8. Leuchteinheit nach einem der Ansprüche 1 bis 7, **dadurch gekennzeichnet, dass** das zumindest eine Lichtleitstab-Paket (100) in einem Lichtquellen-Abstand zu den Lichtquellen (2) angeordnet ist, wobei das zumindest eine Lichtleitstab-Paket (100) vorzugsweise zu allen zugeordneten Lichtquellen (2) denselben Abstand aufweist, wobei vorzugsweise der Lichtquellen-Abstand gegen Null geht oder vorzugsweise Null ist.

9. Leuchteinheit nach einem der Ansprüche 1 bis 8, **dadurch gekennzeichnet, dass** das zumindest eine Lichtleitstab-Paket (100) in einem Lichtführungseinheit-Abstand zu den Lichteinkoppelflächen (30b) der Lichtführungseinheit (3) angeordnet ist.

10. Leuchteinheit nach einem der Ansprüche 1 bis 9, **dadurch gekennzeichnet, dass** die Dicke (d) des zumindest einen Lichtleitstab-Paketes (100), d.h. der Abstand zwischen der den Lichtquellen (2) zugewandten Fläche des Lichtleitstab-Paketes (100) und der der Lichtführungseinheit (3) zugewandten Fläche des Lichtleitstab-Paketes (100), einen definierten Minimalwert aufweist oder überschreitet, welcher Minimalwert derart gewählt ist, dass Licht, welches aus einem einer Lichtquelle zugeordneten Lichtleitstab seitlich austritt, höchstens in zulässige Lichtleitstäbe gelangt.

11. Leuchteinheit nach einem der Ansprüche 1 bis 10, **dadurch gekennzeichnet, dass** das zumindest eine Lichtleitstab-Paket (100) in Form eines plattenförmigen Elementes ausgebildet ist, wobei vorzugsweise in Lichtaustrittsrichtung hintereinander, unmittelbar aneinander anliegend zwei oder mehrere Lichtleitstab-Pakete angeordnet sind.

12. Leuchteinheit nach einem der Ansprüche 1 bis 11, **dadurch gekennzeichnet, dass** jeder Lichtquelle ≥ 10 Lichtleitstäbe zugeordnet sind, mit vorzugsweise 50 - 100 Lichtleitstäbe pro Lichtquelle.

13. Leuchteinheit nach einem der Ansprüche 1 bis 12, **dadurch gekennzeichnet, dass** jeder Lichtquelle ≥ 100, insbesondere ≥ 1000, beispielsweise 5000 - 10000 Lichtleitstäbe zugeordnet sind.

14. Leuchteinheit nach einem der Ansprüche 1 bis 13, **dadurch gekennzeichnet, dass** die Lichtquellen (2) LED-Lichtquellen sind, wobei jede LED-Lichtquelle (2) zumindest eine Leuchtdiode umfasst, wobei vorzugsweise jede LED-Lichtquelle (2) getrennt ansteuerbar und ein- bzw. ausschaltbar und/oder dimmbar ist, wobei vorzugsweise jede Leuchtdiode einer LED-Lichtquelle getrennt ansteuerbar und ein- bzw. ausschaltbar und/oder dimmbar ist.

15. Fahrzeugscheinwerfer mit zumindest einer Leuchteinheit nach einem der Ansprüche 1 bis 14.

## Claims

1. A lighting unit (1) for a headlight, particularly a motor vehicle headlight, wherein the lighting unit (1) comprises a plurality of light sources (2), a light guide unit (3), and a downstream projection lens (4), wherein the light guide unit (3) has a plurality of light guides (30), wherein each light guide (30) has a light extraction surface (30a) and a light injection surface (30b), in each instance, and wherein each light source (2) injects light precisely into one light guide (30) assigned to it, by way of a light injection surface (30b), in each instance,
**characterized in that**
light guide rods (10) are disposed between the light sources (2) and the light injection surfaces (30b) of the light guides (30), which light guide rods (10) are combined into at least one light guide rod package (100), wherein a plurality of light guide rods (10) is assigned to each light source (2), and wherein each light source (2) injects light essentially exclusively into the light guide rod injection sites (10a) of the light guide rods (10) assigned to the respective light source (2), and wherein the light from an assigned light source (2) exiting from the light guide rod extraction sites (10b) is injected essentially exclusively into the light injection surface (30b) of the light guide (30) assigned to the respective light source (2).

2. The lighting unit according to claim 1, **characterized in that** a number of light guide rods (10) is combined to form a fiber rod (11), and that the at least one light guide rod package (100) consists of a number of such fiber rods, so that each light source (2) injects light into a number of such fiber rods (11).

3. The lighting unit according to claim 1 or 2, **characterized in that** light guide rods (10) are combined to form precisely one light guide rod package (100).

4. The lighting unit according to one of claims 1 to 3, **characterized in that** the light guide rods (10) have a square cross-section or preferably a hexagonal cross-section.

5. The lighting unit according to one of claims 2 to 4, **characterized in that** the fiber rods (11) have a square cross-section or preferably a hexagonal cross-section.

6. The lighting unit according to one of claims 1 to 5, **characterized in that** the light guide rods (10) are formed from glass, in the form of rod/pipe systems, with a jacket glass (10') as a pipe and a core glass (10") as a rod, wherein the core glass (10") is jacketed by the jacket glass (10'), wherein preferably, the core glass (10") has an index of refraction that is greater than the index of refraction of the jacket glass (10').

7. The lighting unit according to one of claims 1 to 6, **characterized in that** the light guide rods (10) of a light guide rod package (100) and/or the fiber rods (11) of a fiber rod package (100) run parallel to one another.

8. The lighting unit according to one of claims 1 to 7, **characterized in that** the at least one light guide rod package (100) is disposed at a light source distance from the light sources (20), wherein the at least one light guide rod package (100) preferably has the same distance from all the assigned light sources (2), wherein preferably, the light source distance approaches zero or preferably is zero.

9. The lighting unit according to one of claims 1 to 8, **characterized in that** the at least one light guide rod package (100) is disposed at a light guide unit distance from the light injection surfaces (30b) of the light guide unit (3).

10. The lighting unit according to one of claims 1 to 9, **characterized in that** the thickness (d) of the at least one light guide rod package (100), i.e. the distance between the surface of the light guide rod package (100) that faces the light sources (2) and the surface of the light guide rod package (100) that faces the light guide unit (3) has or exceeds a defined minimum value, which minimum value is selected in such a manner that light that exits laterally out of a light guide rod that is assigned to a light source enters at most into permissible light guide rods.

11. The lighting unit according to one of claims 1 to 10, **characterized in that** the at least one light guide package (100) is configured in the form of a plate-shaped component, wherein preferably two or more light guide rod packages are disposed one behind the other in the light exit direction, lying directly against one another.

12. The lighting unit according to one of claims 1 to 11, **characterized in that** ≥ 10 light guide rods are assigned to each light source, with preferably 50 - 100 light guide rods per light source.

13. The lighting unit according to one of claims 1 to 12, **characterized in that** ≥ 100, particularly ≥ 1,000, for example 5,000 -10,000 light guide rods are assigned to each light source.

14. The lighting unit according to one of claims 1 to 14, **characterized in that** the light sources (2) are LED light sources, wherein each LED light source (2) comprises at least one light-emitting diode, wherein preferably, each LED light source (2) can be controlled and turned on or off and/or dimmed separately, wherein preferably, each light-emitting diode of an LED light source can be controlled and turned on or off and/or dimmed separately.

15. A vehicle headlight having at least one lighting unit according to one of claims 1 to 14.

## Revendications

1. Unité de lampe (1) pour un phare, en particulier pour un phare de véhicule automobile, l'unité de lampe (1) comportant une pluralité de sources lumineuses (2), une unité de guide de lumière (3) et une lentille de projection en aval (4), l'unité de guide de lumière (3) comprenant une pluralité de guides de lumière (30), chaque guide de lumière (30) comprenant une surface de découplage de lumière (30a) et une surface de couplage de lumière (30b), et chaque source lumineuse (2) couplant une lumière exactement dans un guide de lumière (30) affecté à celle-ci par l'intermédiaire d'une surface de couplage de lumière (30b),
**caractérisée par le fait que**
des tiges de conduction de lumière (10) sont agencées entre les sources lumineuses (2) et les surfaces de couplage de lumière (30b) des guides de lumière (30), lesquelles tiges de conduction de lumière (10) sont regroupées en au moins un faisceau de tiges de conduction de lumière (100), une pluralité de tiges de conduction de lumière (10) étant affectée à chaque source lumineuse (2) et chaque source lumineuse (2) couplant une lumière sensiblement exclusivement dans les zones de couplage de tiges de conduction de lumière (10a) des tiges de conduction de lumière (10) affectées à la source lumineuse (2) respective, et la lumière d'une source lumineuse (2) affectée sortant des zones de découplage de tiges de conduction de lumière (10b) étant couplée sensiblement exclusivement dans la surface de couplage de lumière (30b) du guide de lumière (30) affecté à la source de lumière (2) respective.

2. Unité de lampe selon la revendication 1, **caractérisée par le fait qu**'un nombre des tiges de conduction de lumière (10) est regroupé en une tige de fibres (11), et que le au moins un faisceau de tiges de conduction de lumière (100) consiste en un nombre de telles tiges de fibres, de telle sorte chaque source lumineuse (2) couple une lumière dans un nombre de telles tiges de fibres (11).

3. Unité de lampe selon l'une des revendications 1 ou 2, **caractérisée par le fait que** les tiges de conduction de lumière (10) sont regroupées en exactement un faisceau de tiges de conduction de lumière (100).

4. Unité de lampe selon l'une des revendications 1 à 3, **caractérisée par le fait que** les tiges de conduction de lumière (10) ont une section transversale carrée ou de préférence hexagonale.

5. Unité de lampe selon l'une des revendications 2 à 4, **caractérisée par le fait que** les tiges de fibres (11) ont une section transversale carrée ou de préférence hexagonale.

6. Unité de lampe selon l'une des revendications 1 à 5, **caractérisée par le fait que** les tiges de conduction de lumière (10) sont réalisées sous forme de systèmes tige/tube en verre, avec un verre de gainage (10') en tant que tube et avec un verre d'âme (10'') en tant que tige, le verre d'âme (10'') étant entouré par le verre de gainage (10'), de préférence le verre d'âme (10'') ayant un indice de réfraction qui est supérieur à l'indice de réfraction du verre de gainage (10').

7. Unité de lampe selon l'une des revendications 1 à 6, **caractérisée par le fait que** les tiges de conduction de lumière (10) d'un faisceau de tiges de conduction de lumière (100) et/ou les tiges de fibres (11) d'un faisceau de tiges de fibres (100) s'étendent parallèles les unes aux autres.

8. Unité de lampe selon l'une des revendications 1 à 7, **caractérisée par le fait que** le au moins un faisceau de tiges de conduction de lumière (100) est agencé à une distance de source lumineuse des sources lumineuses (2), le au moins un faisceau de tiges de conduction de lumière (100) ayant de préférence la même distance à toutes les sources lumineuses (2) affectées, de préférence la distance de source lumineuse s'approchant de zéro ou de préférence étant zéro.

9. Unité de lampe selon l'une des revendications 1 à 8, **caractérisée par le fait que** le au moins un faisceau de tiges de conduction de lumière (100) est agencé à une distance d'unité de guide de lumière des surfaces de couplage de lumière (30b) de l'unité de guide de lumière (3).

10. Unité de lampe selon l'une des revendications 1 à 9, **caractérisée par le fait que** l'épaisseur (d) du au moins un faisceau de tiges de conduction de lumière (100), à savoir la distance entre la surface du faisceau de tiges de conduction de lumière (100) tournée vers les sources lumineuses (2) et la surface du faisceau de tiges de conduction de lumière (100) tournée vers l'unité de guide de lumière (3), a ou excède une valeur minimale définie, laquelle valeur minimale est sélectionnée de telle sorte qu'une lumière, laquelle sort latéralement d'une tige de conduction de lumière affectée à une source lumineuse, parvient au plus dans des tiges de conduction de la lumière autorisées.

11. Unité de lampe selon l'une des revendications 1 à 10, **caractérisée par le fait que** le au moins un faisceau de tiges de conduction de lumière (100) est réalisé sous la forme d'un élément en forme de panneau, où de préférence au moins deux faisceaux de tiges de conduction de lumière sont agencés directement adjacents l'un à l'autre, l'un après l'autre dans la direction de sortie de lumière.

12. Unité de lampe selon l'une des revendications 1 à 11, **caractérisée par le fait que** pour chaque source lumineuse sont agencées ≥ 10 tiges de conduction de lumière, avec de préférence 50 - 100 tiges de conduction de lumière par source lumineuse.

13. Unité de lampe selon l'une des revendications 1 à 12, **caractérisée par le fait que** pour chaque source lumineuse sont agencées ≥ 100, en particulier ≥ 1000, par exemple 5000 - 10000 tiges de conduction de lumière.

14. Unité de lampe selon l'une des revendications 1 à 13, **caractérisée par le fait que** les sources lumineuses (2) sont des sources lumineuses à diodes électroluminescentes (DEL), chaque source lumineuse à DEL (2) comportant au moins une diode électroluminescente, de préférence chaque source lumineuse à DEL (2) pouvant être commandée et pouvant être mise sous tension ou pouvant être mise hors tension et/ou étant gradée séparément, de préférence chaque diode électroluminescente d'une source lumineuse à DEL pouvant être commandée et pouvant être mise sous tension ou pouvant être mise hors tension et/ou étant gradée séparément.

15. Phare de véhicule automobile ayant au moins une unité de lampe selon l'une des revendications 1 à 14.
